# EUROPÄISCHE PATENTSCHRIFT

(11) **EP 0 738 900 B1**
(45) Veröffentlichungstag und Bekanntmachung des Hinweises auf die Patenterteilung: **18.12.2002**
(21) Anmeldenummer: 96105760.1
(22) Anmeldetag: 12.04.1996
(51) Int. Cl.: G01S 13/91

(54) **Verfahren zur Landehilfe für ein Flugzeug**
Landing aid method for aircrafts
Procédé d'aide à l'atterrissage pour des avions

(30) Priorität: 13.04.1995 DE 19513440
(43) Veröffentlichungstag der Anmeldung: 23.10.1996
(73) Patentinhaber: EADS Deutschland GmbH, 81663 München (DE)
(72) Erfinder: Grüner, Wilhelm, Dr., 89075 Ulm (DE); Tospann, Franz-Josef, 89291 Holzheim (DE)
(74) Vertreter: Meel, Thomas

(56) Entgegenhaltungen:
- EP-A- 0 273 326
- DE-A- 4 243 669
- US-A- 3 243 816
- US-A- 3 716 855
- US-A- 5 208 601
- US-A- 5 483 241
- MTT-S INTERNATIONAL MICROWAVE SYMPOSIUM DIGEST, BOSTON, JUNE 10 - 14, 1991, Bd. 3, 10.Juni 1991, HEITER G L, Seiten 1147-1150, XP000260339 BUI L Q ET AL: "94 GHZ FMCW RADAR FOR LOW VISIBILITY AIRCRAFT LANDING SYSTEM"

## Beschreibung

Die Erfindung betrifft ein Verfahren zur Landehilfe für ein Flugzeug nach dem Oberbegriff des Patentanspruchs 1.

Als Landehilfe für Flugzeuge sind sogenannte ILS- und MLS-Verfahren bekannt. Bei diesen werden im Bereich der Landebahn ortsfeste Sender verwendet, die für einen Landeanflug geeignete elektrische Signale aussenden. Derartige Verfahren sind aufwendig, da technisch aufwendige Bodenanlagen und genau darauf abgestimmte Bord-Auswerteeinrichtungen benötigt werden.

Aus der DE 36 44 478 A1 ist es weiterhin bekannt, für ein Flugzeug mit einem Bordradar entlang der Mittellinie der Landebahn, vorzugsweise an deren Anfang sowie deren Ende jeweils einen Radartransponder aufzustellen. Diese Radartransponder (Baken) sind in nachteiliger Weise ebenfalls aktive Sender, die von dem Bordradar aktiviert werden, und die daher ebenfalls technisch aufwendig sind sowie einer ständigen kostenaufwendigen Wartung bedürfen. Mit Hilfe dieser Baken ist ebenfalls ein Landeanflug möglich mittels der bordeigenen Navigationseinrichtung des Flugzeugs.

Die Schrift US 3716855 zeigt ein Verfahren das es einem Luftfahrzeug ermöglicht den Landeanflug autonom zu steuern. Dabei bestimmt das Luftfahrzeug seine Position relativ zur Landebahn im 3-dimensionalen Raum selbständig. Ein wichtiger Aspekt dieses Verfahrens ist der Rückgriff auf eine Mehrzahl von in besonderer Weise angeordneten passiven Reflektoren, welche in definiertem Abstand vor dem Beginn der Landebahn positioniert sind. Die Besonderheit dieser Anordnung liegt in einer auf einen Zufallscode abbildbare Aufstellung der Reflektoren begründet. Das Tracking-Verfahren sucht nach Zielen, welche entsprechend diesem Zufallscode beabstandet sind und bestimmt aus der daraus gewonnen Entfernungsinformation, sowohl die Entfernung zur Landebahn als auch die azimutale Ablage (2-dimensionale Positionsbestimmung) von der optimalen Anflugrichtung. Die Höhenablage von der optimalen Anflugbahn wird durch die Ausnutzung der Reflektionsinformation von zwei speziell ausgebildeten Reflektoren bestimmt. Diese beiden Reflektoren sind so ausgebildet und ausgerichtet, daß die Hauptstrahlungskeule des einen Reflektors knapp unterhalb der Anflugbahn ausgerichtet ist und die Hauptstrahlungskeule des anderen auf den Bereich knapp oberhalb. Dabei ist Überlappen sich die Hauptstrahlungskeulen entlang der Anflugbahn und weisen in diesem Bereich eine identische Reflexionseigenschaften auf. Aus dem Vergleich der Intensitäten der von diesen Reflektoren empfangenen Reflexionssignale läßt sich somit die Höhenablage des Luftfahrzeugs bezüglich der Anflugbahn bestimmen. Diese Information, in Kombination mit der Information über die azimutale Ablage von der Landebahn, erlaubt die Position des Luftfahrzeuges bezüglich der Landebahn im 3-dimensionalen Raum zu ermitteln.

Der Erfindung liegt die Aufgabe zugrunde, ein gattungsgemäßes Verfahren anzugeben, das selbst unter schlechten Witterungsbedingungen, insbesondere auf kleinen Flughäfen, eine hochgenaue sowie zuverlässige Landung eines Flugzeugs ermöglicht und das kostengünstig und wartungsarm ist.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß im Bereich einer Landebahn lediglich passive Radar-Reflektoren, vorzugsweise sogenannte Corner-Reflektoren, in definierter Weise angeordnet werden müssen. Solche passiven Radar-Reflektoren sind kostengünstig, wartungsarm sowie mechanisch robust.

Ein zweiter Vorteil besteht darin, daß mit den passiven Radar-Reflektoren auch bereits vorhandene Landebahnen, insbesondere von Regional- und/oder Behelfsflugplätzen, in kurzer Zeit und kostengünstig nachgerüstet werden können.

Ein dritter Vorteil besteht darin, daß bei allen gemäß der Erfindung ausgerüsteten Landebahnen eine Landung entsprechend der internationalen Kategorie CAT III b möglich ist, d.h. unter Bedingungen, bei denen nahezu keine optische Sicht vorhanden ist.

Ein vierter Vorteil besteht darin, daß das Verfahren derart kostengünstig und zuverlässig ist, daß bereits bestehende Landebahnen mit einem (Haupt-)Landeverfahren, z.B. ILS-Verfahren, nachrüstbar sind, so daß für diese eine zusätzliche Sicherheit entsteht, beispielsweise beim Ausfall des ILS-Verfahrens während des Landeanflugs eines Flugzeugs. Es ist dann kein sogenanntes Durchstarten erforderlich. Der Landeanflug kann selbst unter den CAT III b-Bedingungen in jeder Landephase fortgesetzt werden.

Weitere Vorteile ergeben sich aus der nachfolgenden Beschreibung.

Die Erfindung beruht auf der Verwendung eines hochauflösenden FM-CW-Bordradars, das in der DE 42 43 669 A1 beschrieben ist. Ein solches Bordradar wird insbesondere zur Überwachung der Landebahn sowie der Rollwege von Flugzeugen verwendet, die sich auf dem Erdboden befinden. Ein solches Bordradar arbeitet beispielweis bei einer Sende-/Empfangsfrequenz von 35 GHz, hat eine Reichweite von ungefähr 5 km, bei einer Entfernung von 5 km eine Entfernungsauflösung von ungefähr 3 m, eine Winkelauflösung von ungefähr 1° sowie eine Winkel-Scan-Rate in der Azimutebene, die im wesentlichen parallel zur Erdoberfläche liegt, von ungefähr 15/sec (Abtastrate im Azimutbereich). Ein solches Bordradar ist vorteilhafterweise räumlich klein, so daß damit insbesondere sowohl große Passagier- und/oder Frachtflugzeuge als auch kleinere Flugzeuge, die auf Regional- sowie Behelfsflughäfen starten und/oder landen können, ausrüstbar sind.

Im Bereich der Landebahn werden nun mehrere für den verwendeten (Radar-)Frequenzbereich, z.B. 35 GHz, geeignete passive Reflektoren, vorzugsweise an sich bekannte Corner-Reflektoren, in einer nahezu beliebigien, aber genau definierten Weise aufgestellt. Es werden, in Abhängigkeit von der Länge der Landebahn, beispielsweise mindestens zehn Corner-Reflektoren verwendet. Jeweils fünf Reflektoren sind auf jeder Seite der Landebahn in äquidistanten Abständen entlang einer Geraden angeordnet. Deren Richtungen sind parallel zur Mittellinie der Landebahn. Der Abstand der Geraden von der Mittellinie ist so gewählt, daß die Geraden beispielsweise einen Abstand von genau 2 m zur seitlichen Randbegrenzung der Landebahn besitzen. Die Geraden sind so angeordnet, daß beispielsweise deren erster Reflektor seitlich neben dem Soll-Landepunkt liegt, der für jede Landebahn vorgegeben ist. Eine solche hochgenaue Anordnung ist mittels derzeit bekannter Geodäsie-Verfahren möglich, beispielsweie mittels eines Satellitennavigationsverfahrens oder eines Laser-Meßverfahrens. Diese bekannte Anordnung der Corner-Reflektoren wird in der Auswerteeinheit des Bordradars gespeichert. Bei einem Landeanflug ist für das Bordradar also eine sogenannte ortsfeste bekannte Mehrzielsituation vorhanden, deren scheinbare Änderungen, bedingt durch die dreidimensionale Positionsänderung des Flugzeugs, mittels eines Tracking-Verfahrens (Spurverfolgungs-Verfahrens) ausgewertet werden, beispielsweise mittels einer Kalman-Filterung. Aus diesen Änderungen wird nun in der Auswerteeinheit des Bordradars die dreidimensionale Ist-Position des Flugzeugs sowie deren Änderungen bestimmt. Ein Pilot und/oder ein bordeigenes automatisches Landesystem kann nun fortlaufend diese Ist-Position mit vorgegebenen Soll-Positionen (Soll-Landeweg) vergleichen und ggf. von dem Vergleich abhängige Steuervorgänge durchführen.

Das folgende Beispiel erläutert die erreichbaren Genauigkeiten:
Es werden zwölf Corner-Reflektoren verwendet, jeweils sechs entlang einer Geraden, die in der beschriebenen Weie neben der Landebahn und parallel zu dieser angeordnet sind. Entlang einer Geraden haben die Corner-Reflektoren einen aquidistanten Abstand von 250,0 m. Der jeweils erste Reflektor ist, bezogen auf die Flugrichtung, neben dem Soll-Landepunkt angeordnet. Für ein sich im Landeanflug befindliches Flugzeug gelten die Koordinaten x, y, z (Ist-Position). Dabei bedeuten
- x =: Entfernung des Flugzeugs von dem Soll-Landepunkt, gemessen auf der Erdoberfläche entlang der Richtung der Mittellinie der Landebahn;
- y =: Abstand des Flugzeugs von der Mittellinie der Landebahn, gemessen auf der Erdoberfläche;
- z =: Höhe des Flugzeugs über dem Erdboden.

Ist nun ein Soll-Landeweg (Landeanflug) vorgegeben, so werden im folgenden mit dx, dy, dz die zu den vorstehend beschriebenen Koordinaten gehörenden möglichen Abweichungen der Ist-Position des Ist-Landeweges des Flugzeugs bezeichnet. Mit dem beschriebenen Navigationsverfahren sind folgende Genauigkeiten erreichbar:
- bei x: = 2500 m ist
dx ≤ 0,25 m, dy ≤ 1,5 m und dz ≤ 4,5 m;
- bei x =: 1250 m ist
dx ≤ 0,2 m, dy ≤ 1 m und dz ≤ 2,25 m;
- bei x =: 0 (Soll-Landepunkt) ist
dx ≤ 0,1 m, dy ≤ 0,1 m und dz ≤ 0,3 m.

Diese in überraschender Weise hohen Genauigkeiten genügen den eingangs erwähnten CAT III b-Bedingungen.

## Patentansprüche

1. Verfahren zur Landehilfe für ein Flugzeug, insbesondere für die Landungen bei schlechten Sichtverhältnissen und/oder auf einer Behelfslandebahn, mittels eines Bordradars in Form eines FMCW-Radars mit kurzer Reichweite und mit hoher Entfernungs- und Winkelauflösung, wobei im Bereich der Landebahn mehrere passive Radarreflektoren angeordnet sind, welche mittels eines Tracking-Verfahrens detektiert werden,
**dadurch gekennzeichnet, dass** das Tracking-Verfahren
die durch die dreidimensionale Positionsänderung des Flugzeugs bedingten scheinbaren Änderungen in einer durch die Radarreflektoren gebildeten und in einer Auswerteeinheit des Bordradars gespeicherten ortsfesten, bekannten Mehrzielsituation auswertet, wobei als Ergebnis die 3-dimensionale Position des Flugzeugs bezüglich der Landebahn ermittelt wird.

2. Verfahren nach Anspruch 1, **dadurch gekennzeichnet, daß** die Radarreflektoren als Corner-Reflektoren ausgebildet werden.

3. Verfahren nach Anspruch 1 oder Anspruch 2, **dadurch gekennzeichnet, daß** im Bereich einer Landebahn in geometrisch definierter und bekannter Weie mindestens zehn Radarreflektoren angeordnet werden.

4. Verfahren nach einem der vorhergehenden Ansprüche, **dadurch gekennzeichnet, daß** für das Tracking-Verfahren eine Kalman-Filterung verwendet wird.

## Claims

1. Method for a landing aid for an aircraft, in particular for landings in poor visibility conditions and/or on a secondary runway, by means of an on-board radar in the form of an FMCW radar with a short range and with high range and angular resolution, with a number of passive radar reflectors being arranged in the area of the runway, which are detected by means of a tracking method, **characterized in that** the tracking method evaluates the apparent changes, which are caused by three-dimensional position changes of the aircraft, in a fixed-position, known multiple target situation, which is formed by the radar reflectors and is stored in an evaluation unit in the on-board radar, with the 3-dimensional position of the aircraft with respect to the runway being determined as the result.

2. Method according to Claim 1, **characterized in that** the radar reflectors are in the form of corner reflectors.

3. Method according to Claim 1 or Claim 2, **characterized in that** at least ten radar reflectors are arranged in a geometrically defined and known manner in the region of a runway.

4. Method according to one of the preceding claims, **characterized in that** Kalman filtering is used for the tracking method.

## Revendications

1. Procédé d'aide à l'atterrissage pour un aéronef, plus particulièrement pour les atterrissages dans des mauvaises conditions de visibilité et/ou sur une piste d'atterrissage de secours, au moyen d'un radar embarqué sous la forme d'un radar FMCW à courte portée et à haute résolution de distance et d'angle, plusieurs réflecteurs radar passifs étant disposés à proximité de la piste d'atterrissage, lesquels sont détectés au moyen d'un procédé de tracking, **caractérisé en ce que** le procédé de tracking analyse les modifications apparentes liées au changement de position tridimensionnel de l'aéronef dans une situation multicibles fixe connue constituée par les réflecteurs radar et mémorisée dans une unité d'analyse du radar embarqué, le résultat communiqué étant la position tridimensionnelle de l'aéronef par rapport à la piste d'atterrissage.

2. Procédé selon la revendication 1, **caractérisé en ce que** les réflecteurs radar sont réalisés sous la forme de réflecteurs en coin.

3. Procédé selon la revendication 1 ou la revendication 2, **caractérisé en ce qu'**au moins dix réflecteurs radar sont disposés à proximité d'une piste d'atterrissage d'une manière géométriquement définie et connue.

4. Procédé selon l'une des revendications précédentes, **caractérisé en ce qu'**un filtrage de Kalman est utilisé pour le procédé de tracking.
